# DEMANDE DE BREVET EUROPEEN

(11) **EP 1 632 837 A1**
(43) Date de publication de la demande: **08.03.2006**
(21) Numéro de dépôt: 05291815.8
(22) Date de dépôt: 31.08.2005
(51) Int. Cl.: G06F 1/08

(54) **Procédé de configuration du système d'horloge d'un microcontrôleur**

(30) Priorité: 02.09.2004 FR 0409307
(71) Demandeur: STMICROELECTRONICS SA, 92120 Montrouge (FR)
(72) Inventeur: Plourde, Olivier, 13100 Aix-en-Provence (FR)
(74) Mandataire: Bentz, Jean-Paul

(57) **Abrégé**

L'invention concerne un procédé de configuration d'un système d'horloge d'un microcontrôleur comprenant un oscillateur principal (OSC), caractérisé en ce qu'il comprend les étapes d'activation dudit oscillateur principal et d'un oscillateur de secours (VCO) en mode initialisation, de génération d'un signal d'horloge à partir dudit oscillateur de secours, et d'application du signal d'horloge au microcontrôleur pour démarrer celui-ci.

## Description

La présente invention concerne un procédé de configuration du système d'horloge d'un microcontrôleur.

Un microcontrôleur comprend notamment :
- une unité centrale de calcul CPU (Central Processing Unit, en anglais), qui est le coeur du microcontrôleur ;
- une mémoire centrale de type ROM, EPROM, EEPROM ou Flash-EPROM dans laquelle est mémorisé un programme, appelé programme utilisateur, chargé par l'utilisateur préalablement à l'implantation du microcontrôleur dans l'application ;
- un oscillateur, assurant la fonction d'horloge principal du microcontrôleur, prévu pour générer un signal d'horloge, dont la fréquence est de l'ordre de la dizaine de mégahertz, qui est utilisé pour activer les circuits internes du microcontrôleur, notamment l'unité CPU, en mode exécution ;

Un microcontrôleur comprend également généralement un circuit avec un oscillateur auxiliaire, remplissant la fonction d'oscillateur de secours en mode exécution. La fonction d'un tel circuit consiste ainsi à fournir à l'unité CPU un signal basse fréquence délivré par l'oscillateur de secours, lorsque le signal d'horloge délivré par l'oscillateur principal est absent ou présente une fréquence inférieure à un seuil prédéterminé.

Le microcontrôleur contient en général d'autres circuits périphériques internes qu'il n'est toutefois pas nécessaire de décrire plus en détail dans le cadre de la présente description.

Une séquence d'initialisation (Reset Sequence, en anglais) fait passer le microcontrôleur d'un mode de fonctionnement de départ au mode exécution (Run, en anglais), dans lequel est exécuté le programme chargé par l'utilisateur dans la mémoire du microcontrôleur. Entre ces deux modes, c'est-à-dire pendant la séquence d'initialisation, le microcontrôleur est en mode initialisation (Reset, en anglais).

Lorsque la séquence d'initialisation est initiée par la mise sous tension du microcontrôleur, le mode de départ est un mode hors alimentation. Tous les circuits internes du microcontrôleur, sauf ceux dédiés à la gestion de la séquence d'initialisation, sont inhibés, de sorte qu'ils ne fonctionnent pas. Le microcontrôleur ne passe en mode exécution que lorsque la fréquence d'horloge de l'oscillateur principal est stabilisée.

La séquence d'initialisation peut également être initiée par un signal d'initialisation externe ou par un signal d'initialisation provenant d'un circuit dit « chien de garde ». Le mode de fonctionnement de départ est alors le mode exécution.

Un mode stop peut également être exécuté dans lequel toutes les activités internes du CPU sont arrêtées.

Dans la plupart des microcontrôleurs utilisant un résonateur externe de type quartz pour le système d'horloge, la phase de stabilisation de l'oscillateur fournissant le signal d'horloge provoque une perte de temps au démarrage. De plus, si une boucle à verrouillage de phase PLL est utilisée pour multiplier la fréquence d'horloge, il faut également tenir compte du temps de stabilisation de la boucle avant de pouvoir utiliser la PLL comme système d'horloge et de démarrer l'application. Aussi, ces contraintes empêchent de prévoir un démarrage rapide du microcontrôleur après l'initiation d'une séquence d'initialisation ou après un mode stop.

Egalement, la configuration du fonctionnement du microcontrôleur, par exemple le choix d'une source d'horloge parmi celles disponibles sur le microcontrôleur pour tenir compte d'impératifs propres à l'application, est soit figée de façon matérielle, ce qui laisse peu de flexibilité à l'utilisateur, ou nécessite une étape de lecture d'un mot d'option qui est mémorisée dans la mémoire du microcontrôleur. Cette dernière étape intervient en mode exécution du microcontrôleur.

L'objet de la présente invention est d'optimiser le fonctionnement d'un microcontrôleur, en permettant un démarrage sûr et rapide du microcontrôleur sur une fréquence d'horloge garantie après l'initiation d'une séquence d'initialisation ou après un mode stop.

Un autre objet est de permettre à l'utilisateur de choisir à tout moment la configuration de son système d'horloge.

L'invention concerne donc un procédé de configuration du système d'horloge d'un microcontrôleur comprenant un oscillateur principal, caractérisé en ce qu'il comprend les étapes d'activation dudit oscillateur principal et d'un oscillateur de secours en mode initialisation, de génération d'un signal d'horloge à partir dudit oscillateur de secours, et d'application du signal d'horloge au microcontrôleur pour démarrer celui-ci.

Selon un mode de réalisation, une étape de basculement sur l'oscillateur principal est prévue, pour générer le signal d'horloge du microcontrôleur, lorsque ledit oscillateur principal génère un signal stabilisé.

Selon ce mode de réalisation, le basculement sur l'oscillateur principal comme source d'horloge du microcontrôleur, comprend le chargement d'un bit de sélection de l'oscillateur principal dans un registre de sélection d'horloge dudit microcontrôleur.

Avantageusement, le basculement sur l'oscillateur principal comme source d'horloge du microcontrôleur est autorisé après lecture d'un bit d'information dans un registre de temporisation dudit microcontrôleur indiquant l'état stabilisé du signal d'horloge généré par ledit oscillateur principal.

Selon un mode de réalisation, le procédé comprend une étape d'activation d'une boucle à verrouillage de phase associée à l'oscillateur principal et une étape de basculement sur la boucle à verrouillage de phase pour générer le signal d'horloge du microcontrôleur, lorsque ladite boucle est verrouillée.

Selon ce mode de réalisation, l'activation de la boucle à verrouillage de phase comprend le chargement d'un bit d'activation dans un registre d'activation de la boucle à verrouillage de phase du microcontrôleur, et le basculement sur la boucle à verrouillage de phase comme source d'horloge du microcontrôleur, comprend le chargement d'un bit de sélection de la boucle à verrouillage de phase dans un registre de sélection d'horloge dudit microcontrôleur.

Avantageusement, le basculement sur la boucle à verrouillage de phase comme source d'horloge du microcontrôleur est autorisé lorsque un registre de contrôle dudit microcontrôleur indique l'état verrouillé de ladite boucle.

De préférence, un bit de configuration est chargé dans au moins un registre de configuration de la boucle à verrouillage de phase pour la configurer avant son activation.

Avantageusement, lorsque le microcontrôleur est cadencé par le signal d'horloge délivré par l'oscillateur de secours, un bit de configuration est chargé dans un registre de configuration d'au moins un circuit interne du microcontrôleur.

L'invention concerne également un système d'horloge d'un microcontrôleur comprenant un oscillateur principal et un oscillateur de secours, caractérisé en ce qu'il comprend des moyens d'activation dudit oscillateur de secours en mode initialisation, des moyens de génération d'un signal d'horloge à partir dudit oscillateur de secours, et des moyens d'application du signal d'horloge au microcontrôleur pour démarrer celui-ci.

Selon un mode de réalisation, l'oscillateur de secours utilisé pour démarrer le microcontrôleur est un oscillateur RC interne audit microcontrôleur.

Selon un autre mode de réalisation, le microcontrôleur comprenant une boucle à verrouillage de phase associée à l'oscillateur principal, l'oscillateur de secours utilisé pour démarrer ledit microcontrôleur est l'oscillateur de ladite boucle à verrouillage de phase fonctionnant en mode boucle ouverte.

Avantageusement, le système comprend des moyens pour basculer de l'oscillateur de secours à l'oscillateur principal pour générer le signal d'horloge du microcontrôleur, lorsque ledit oscillateur principal est stabilisé.

Avantageusement, le système comprend des moyens pour activer la boucle à verrouillage de phase et des moyens pour basculer de l'oscillateur principal à la boucle à verrouillage de phase pour générer le signal d'horloge du microcontrôleur, lorsque ladite boucle est verrouillée.

Avantageusement, le système comprend des moyens pour configurer la boucle à verrouillage de phase avant son activation.

L'invention concerne encore un microcontrôleur, caractérisé en ce qu'il comprend un système d'horloge tel qu'il vient d'être décrit.

Grâce au procédé et au système de l'invention, le démarrage du microcontrôleur se fait plus rapidement. Une fois le microcontrôleur réveillé, la configuration du fonctionnement du microcontrôleur et en particulier de circuits de son système d'horloge, peut être mise en oeuvre de manière logicielle au rythme d'un signal d'horloge généré par un oscillateur de secours.

Ainsi, cette configuration peut avantageusement être mise en oeuvre pendant la période de temps qui était perdue lors de la phase de démarrage classique.

De plus, le procédé de l'invention offre une grande souplesse à l'utilisateur qui peut modifier la configuration de son système d'horloge à tout moment.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 représente un schéma des circuits internes d'un microcontrôleur selon un mode de réalisation particulier, pour la mise en oeuvre du procédé selon l'invention ;
- la figure 2 représente les chronogrammes des signaux générés lors de la mise en oeuvre du procédé de configuration selon l'invention.

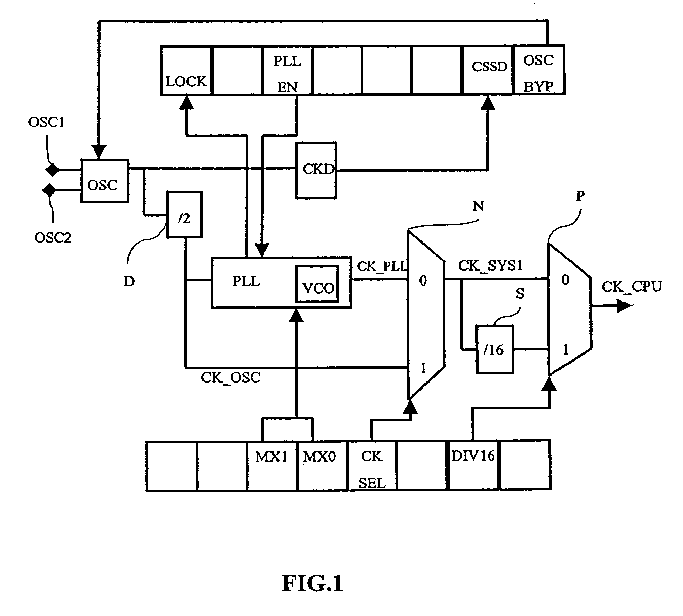

A la figure 1, on a donc représenté des circuits internes du microcontrôleur qui permettent, selon un mode de réalisation particulier la mise en oeuvre du procédé selon l'invention.

Ainsi, le système d'horloge du microcontrôleur comprend principalement un oscillateur principal OSC, associé à une boucle à verrouillage de phase PLL.

Le circuit d'oscillateur principal OSC peut être configuré en sélectionnant une source d'oscillations particulière, parmi notamment un résonateur externe (quartz) de fréquence déterminée, un circuit RC externe, un circuit RC interne, ou encore un oscillateur externe. A cet effet, il est connecté à deux broches d'accès OSC1 et OSC2 du microcontrôleur.

Le circuit oscillateur génère par exemple un signal d'horloge à 4 Mhz. Il peut être inhibé par l'intermédiaire d'un registre OSCBYP du microcontrôleur programmable par logiciel, de sorte à utiliser un oscillateur externe en mode « test » ou « user » (mode normal d'utilisation).

L'oscillateur principal comprend un bloc de temporisation doté d'un compteur, permettant d'indiquer que le signal d'horloge délivré par l'oscillateur est stable. Par exemple, on peut considérer que l'oscillateur est stable lorsque :
- le signal de temporisation fourni par le bloc de temporisation passe à 1 (i.e., l'état logique haut) après une temporisation de valeur fixe, ou
- à la lecture de la valeur du compteur, et à l'utilisateur de considérer alors si l'oscillateur est stable.

La sortie de l'oscillateur principal OSC est connectée à un circuit de détection CKD du microcontrôleur, dont le rôle est de détecter si un signal d'horloge est présent sur son entrée. Le circuit CKD commande l'écriture d'un bit d'information correspondant dans un registre CSSD du microcontrôleur. Un 1 (i.e., l'état logique haut) est par exemple écrit dans le registre CSSD indiquant que l'horloge de l'oscillateur OSC n'est pas présente et un 0 (i.e., l'état logique bas) autrement.

Un circuit diviseur D est de préférence intercalé entre la sortie du circuit d'oscillateur principal et l'entrée de la boucle à verrouillage de phase PLL. Le rapport de division du circuit D vaut par exemple 2.

Le signal CK_OSC délivré par l'oscillateur principal, éventuellement divisé par 2, est donc transmis sur l'entrée de la boucle à verrouillage de phase et est également transmis sur une première entrée d'un circuit multiplexeur N.

Le signal CK_OSC est en fait transmis sur l'entrée de la boucle à verrouillage de phase PLL par l'intermédiaire d'une porte logique, non représentée sur la figure, qui, par défaut, en mode initialisation, ne laisse pas passer le signal CK_OSC en entrée de la boucle à verrouillage de phase.

Le signal de sortie CK_PLL de la boucle à verrouillage de phase PLL est transmis sur une seconde entrée du circuit multiplexeur N. Le multiplexeur N, qui fournit le signal d'horloge CK_CPU du microcontrôleur est commandé par un registre CKSEL du microcontrôleur programmable par logiciel.

Le signal d'horloge du système CK_CPU peut également être fourni par l'intermédiaire d'un circuit diviseur S du microcontrôleur. Dans l'exemple de réalisation, le rapport de division du circuit S vaut 16. Ainsi, selon ce mode de réalisation, le signal de sortie, nommé CK_SYS1, du multiplexeur N est transmis d'une part, sur une première entrée d'un deuxième circuit multiplexeur P et, d'autre part sur l'entrée du circuit diviseur S. La sortie du circuit diviseur S est quant à elle reliée sur une deuxième entrée du circuit multiplexeur P, qui délivre sur sa sortie le signal d'horloge du microcontrôleur CK_CPU. Le multiplexeur P, qui fournit le signal d'horloge CK_CPU, est alors commandé par un registre DIV16 du microcontrôleur programmable par logiciel. D'autres blocs de division pourraient également être intercalés.

Différents registres du microcontrôleur programmables par logiciel sont prévus pour le fonctionnement de la boucle à verrouillage de phase PLL. Ainsi, un registre PLLEN commande l'activation de la boucle à verrouillage de phase. Un registre LOCK est prévu pour indiquer l'état verrouillé de la boucle après son activation. Enfin, des registres MX1 et MX0 sont prévus pour configurer la boucle à verrouillage de phase avant son activation. Ces registres MX0 et MX1 peuvent ainsi permettre de sélectionner le facteur de multiplication de la boucle.

Dans la description qui suit, le choix de l'horloge de secours du microcontrôleur a été fait en tenant compte de la présence de la boucle à verrouillage de phase PLL. Selon ce mode de réalisation, l'oscillateur de secours est l'oscillateur commandé en tension VCO de la boucle à verrouillage de phase PLL fonctionnant en mode boucle ouverte. Ainsi, quand aucun signal d'horloge n'est présent sur son entrée, la sortie de la boucle à verrouillage de phase PLL délivre une horloge, non précise, travaillant à la fréquence de l'oscillateur VCO. De cette manière, l'oscillateur VCO de la boucle à verrouillage de phase en mode boucle ouverte remplit la fonction d'oscillateur de secours sur lequel le microcontrôleur est démarré en mode initialisation, comme on le verra plus en détail par la suite.

Toutefois, le choix de l'horloge de secours n'entraîne aucun caractère restrictif à la présente invention, étant entendu que d'autres types d'horloge de secours pourraient être mises en oeuvre, par exemple un oscillateur RC interne.

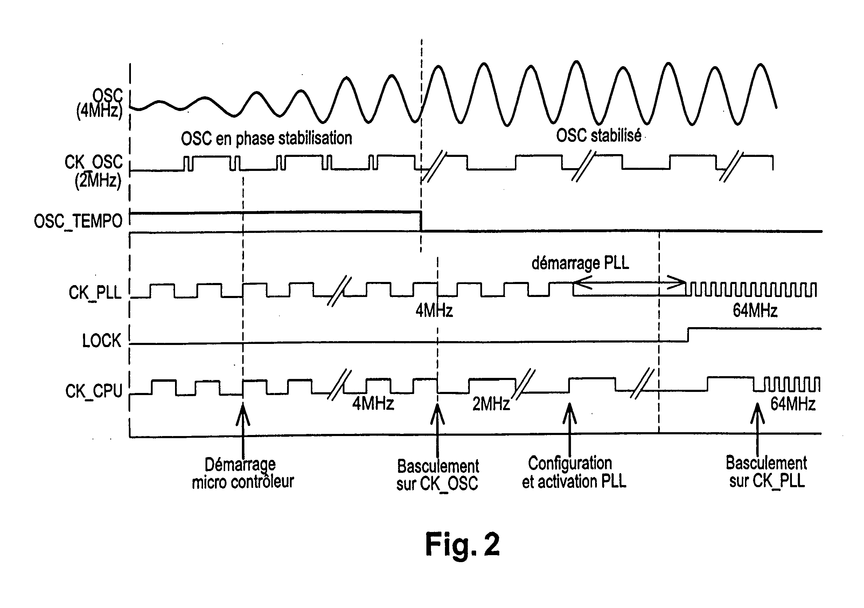

Intéressons nous maintenant en détail au fonctionnement des circuits de la figure 1 après l'initiation du mode initialisation ou après un mode stop. La description qui suit sera faite également en liaison avec les chronogrammes de la figure 2.

La configuration en mode initialisation de la boucle à verrouillage de phase PLL est donc le mode boucle ouverte. La porte logique en entrée de la boucle à verrouillage de phase est pour ce faire commandée pour agir comme un interrupteur ouvert, quelque soit la valeur du signal d'horloge CK_OSC. L'oscilllateur VCO, qui remplit le rôle d'oscillateur de secours dans cette configuration, est alors utilisée comme source d'horloge pour le microcontrôleur. La fréquence du signal de sortie de la boucle à verrouillage de phase F_{CK_PLL} est alors égale à la fréquence de l'oscillateur VCO en boucle ouverte, qui est centrée autour de 4 Mhz par exemple.

En mode initialisation, l'état du bit mémorisé dans le registre CKSEL de sélection de la source d'horloge est choisi par exemple à 0 (i.e., l'état logique bas), ce qui permet de commander le circuit multiplexeur N de telle sorte que la source d'horloge sélectionnée soit effectivement la sortie de la boucle à verrouillage de phase en mode boucle ouverte, F_{CK_SYS1} = F_{CK_PLL} .

L'horloge VCO de la PLL, dont le signal de sortie CK_PLL est représenté à la figure 2, commence donc à fonctionner. Le signal CK_PLL est utilisé pour générer le signal d'horloge CK_CPU qui va démarrer le microcontrôleur. De cette façon, le microcontrôleur est démarré très rapidement. On peut prévoir néanmoins, comme illustré, une petite temporisation au niveau de l'oscillateur VCO, qui filtre les premiers coups d'horloge.

Même si cette horloge n'est pas précise, cela n'a pas d'importance pour la phase de configuration logicielle des circuits internes du microcontrôleur.

En parallèle à ces opérations de démarrage du microcontrôleur, en mode initialisation, l'oscillateur principal est prévu pour être démarré immédiatement. La figure 2 illustre le signal de sortie de l'oscillateur principal OSC en phase de stabilisation, puis lorsqu'il est stabilisé, ainsi que le signal équivalent logique CK_OSC. En phase de stabilisation, on remarque la présence d'impulsions transitoires non désirées.

Ainsi, la phase de stabilisation de l'oscillateur principal OSC est lancée tandis que le microcontrôleur est réveillé et que le programme utilisateur s'exécute en utilisant l'oscillateur de secours VCO de la boucle à verrouillage de phase en mode boucle ouverte comme source d'horloge.

On peut donc déjà profiter de cette phase pour configurer au moins une partie du système d'horloge du microcontrôleur, au rythme de l'horloge délivrée par l'oscillateur de secours VCO. Par exemple, le multiplexeur P peut être commandé de sorte à fournir un signal d'horloge CK_CPU divisé. Pour ce faire, un bit de configuration à l'état logique haut selon l'exemple de la figure 1, est chargé dans le registre de configuration DIV16. Dans ce cas, le signal d'horloge sélectionné est le signal de sortie du circuit diviseur S.

Selon l'invention, il est donc possible de modifier la configuration logicielle du système d'horloge à tout moment et, en particulier durant la phase de stabilisation de l'oscillateur principal.

La sélection de la source d'horloge peut être commandée par l'intermédiaire du registre de sélection CKSEL. Ainsi, on peut par exemple basculer de l'oscillateur de secours VCO sur l'oscillateur principal OSC pour générer le signal d'horloge du microcontrôleur, en chargeant un bit de sélection de l'oscillateur principal dans le registre de sélection d'horloge CKSEL du microcontrôleur.

Toutefois, avant de mettre en oeuvre cette opération, il faut s'assurer que le signal délivré par l'oscillateur principal est bien présent et stabilisé. Pour ce faire, il faut à la fois que le bit CSSD soit remis à 0 et que la temporisation soit terminée. Le bloc de temporisation de l'oscillateur principal peut compter un nombre prédéterminé de cycles du signal d'horloge CK_OSC au delà duquel on considère que le signal délivré en sortie de l'oscillateur principal est stabilisé.

Selon un mode de réalisation, le bloc de temporisation de l'oscillateur principal peut délivrer un signal logique OSC TEMPO à l'état 1 tant que la valeur prédéterminée du compteur du bloc de temporisation n'est pas atteinte et passant à l'état logique 0 lorsque cette valeur est atteinte, signifiant ainsi que l'oscillateur principal OSC est stabilisé. Un registre de temporisation, pourrait être prévu pour indiquer l'état de ce signal.

Le basculement sur l'oscillateur principal OSC pour générer le signal d'horloge CK_CPU peut alors être effectué en chargeant un 1 logique selon l'exemple, dans le registre de sélection CKSEL du microcontrôleur. De cette façon, le registre commande le circuit multiplexeur N de telle sorte que la source d'horloge sélectionnée soit la sortie de l'oscillateur principal, F_{CK_SYS1} = F_{CK_OSC}. Ce signal peut être divisé ou non pour générer le signal CK_CPU en fonction de la configuration du registre prévu à cet effet DIV16.

L'utilisateur peut dès lors choisir d'utiliser la boucle à verrouillage de phase PLL comme source d'horloge pour le microcontrôleur. Une étape de configuration de la boucle à verrouillage de phase avant son activation peut alors mise en oeuvre, dans laquelle un bit de configuration est chargé dans chaque registre de configuration MX1 et MX0, permettant de commander le choix du facteur de multiplication de la boucle.

Une fois ces opérations de configuration effectuées, on commande l'activation de la boucle à verrouillage de phase PLL par le chargement d'un bit d'activation, par exemple égal à 1, dans le registre d'activation PLLEN, ce qui commande la porte logique en entrée de la boucle à verrouillage de phase, de sorte à laisser passer le signal stabilisé délivré par l'oscillateur principal. Il est alors nécessaire d'attendre que la boucle à verrouillage de phase soit verrouillée avant de basculer sur le signal CK_PLL de sortie de la boucle pour générer le signal d'horloge CK_CPU du microcontrôleur.

Le basculement sur la boucle à verrouillage de phase PLL comme source d'horloge du microcontrôleur est en fait autorisé lorsque le registre de contrôle LOCK du microcontrôleur indique l'état verrouillé de ladite boucle. Par exemple, dès que la boucle est verrouillée, le bit mémorisé dans le registre LOCK passe à 1. La fréquence du signal de sortie de la boucle à verrouillage de phase CK_PLL vaut alors 64 MHz selon l'exemple.

Le basculement de l'oscillateur principal OSC à la boucle à verrouillage de phase PLL comme source d'horloge pour générer le signal d'horloge du microcontrôleur peut alors être effectué en chargeant un 0 logique selon l'exemple, dans le registre de sélection CKSEL du microcontrôleur. De cette façon, le registre CKSEL commande le circuit multiplexeur N de telle sorte que la source d'horloge sélectionnée soit la sortie de la boucle à verrouillage de phase, F_{CK_SYS1} = F_{CK_PLL}. Ce signal peut être divisé ou non pour générer le signal d'horloge CK_CPU en fonction de la configuration du registre prévu à cet effet DIV16.

La configuration logicielle du système d'horloge est donc rendue très flexible pour l'utilisateur, qui peut sélectionner à tout moment, grâce au chargement d'un bit de sélection dans le registre CKSEL, une source d'horloge parmi l'oscillateur principal, l'oscillateur principal associé à la boucle à verrouillage de phase, l'oscillateur de secours constitué par l'oscillateur VCO de la boucle à verrouillage de phase en mode boucle ouverte, ou encore une horloge externe.

## Revendications

1. Procédé de configuration d'un système d'horloge d'un microcontrôleur comprenant un oscillateur principal (OSC), une boucle à verrouillage de phase et un oscillateur de secours, **caractérisé en ce qu'**il comprend les étapes d'activation dudit oscillateur principal et dudit oscillateur de secours (VCO) en mode initialisation, de génération d'un signal d'horloge (CK_CPU) à partir dudit oscillateur de secours, et d'application du signal d'horloge au microcontrôleur pour démarrer celui-ci, et **en ce qu'**on utilise en tant qu'oscillateur de secours, l'oscillateur (VCO) de ladite boucle à verrouillage de phase fonctionnant en mode boucle ouverte.

2. Procédé selon la revendication 1, **caractérisé en ce que** qu'il comprend une étape de basculement sur l'oscillateur principal (OSC) pour générer le signal d'horloge du microcontrôleur, lorsque ledit oscillateur principal génère un signal stabilisé.

3. Procédé selon la revendication 2, **caractérisé en ce que** le basculement sur l'oscillateur principal (OSC) comme source d'horloge du microcontrôleur, comprend le chargement d'un bit de sélection de l'oscillateur principal dans un registre de sélection d'horloge (CKSEL) dudit microcontrôleur.

4. Procédé selon la revendication 2 ou 3, **caractérisé en ce que** le basculement sur l'oscillateur principal (OSC) comme source d'horloge du microcontrôleur est autorisé après lecture d'un bit d'information dans un registre de temporisation dudit microcontrôleur indiquant l'état stabilisé du signal d'horloge généré par ledit oscillateur principal.

5. Procédé selon l'une quelconque des revendications 1 à 4, **caractérisé en ce qu'**il comprend une étape d'activation de la boucle à verrouillage de phase (PLL) et une étape de basculement sur la boucle à verrouillage de phase pour générer le signal d'horloge du microcontrôleur, lorsque ladite boucle est verrouillée.

6. Procédé selon la revendication 5; **caractérisé en ce que** l'activation de la boucle à verrouillage de phase (PLL) comprend le chargement d'un bit d'activation dans un registre d'activation (PLLEN) de la boucle à verrouillage de phase du microcontrôleur.

7. Procédé selon la revendication 5 ou 6, **caractérisé en ce que** le basculement sur la boucle à verrouillage de phase (PLL) comme source d'horloge du microcontrôleur, comprend le chargement d'un bit de sélection de la boucle à verrouillage de phase dans un registre de sélection d'horloge (CKSEL) dudit microcontrôleur.

8. Procédé selon l'une quelconque des revendications 5 à 7, **caractérisé en ce que** le basculement sur la boucle à verrouillage de phase (PLL) comme source d'horloge du microcontrôleur est autorisé lorsque un registre de contrôle (LOCK) dudit microcontrôleur indique l'état verrouillé de ladite boucle.

9. Procédé selon l'une quelconque des revendications 5 à 8, **caractérisé en ce qu'**un bit de configuration est chargé dans au moins un registre de configuration (MX1, MX0) de la boucle à verrouillage de phase (PLL) pour la configurer avant son activation.

10. Procédé selon l'une quelconque des revendications précédentes, **caractérisé en ce que**, lorsque le microcontrôleur est cadencé par le signal d'horloge délivré par l'oscillateur de secours, un bit de configuration est chargé dans un registre de configuration (DIV16) d'au moins un circuit interne du microcontrôleur.

11. Procédé selon la revendication 10, **caractérisé en ce que** le circuit interne configuré est un circuit diviseur du signal d'horloge du microcontrôleur.

12. Système d'horloge d'un microcontrôleur comprenant un oscillateur principal (OSC), une boucle à verrouillage de phase et un oscillateur de secours (VCO), **caractérisé en ce qu'**il comprend des moyens d'activation dudit oscillateur de secours en mode initialisation, des moyens de génération d'un signal d'horloge (CK_CPU) à partir dudit oscillateur de secours, et des moyens d'application du signal d'horloge au microcontrôleur pour démarrer celui-ci, ledit oscillateur de secours utilisé pour démarrer les microcontrôles étant l'oscillateur (VCO) de ladite boucle à verrouillage de phase fonctionnant en mode boucle ouverte.

13. Système selon la revendication 12, **caractérisé en ce qu'**il comprend des moyens (CKSEL) pour basculer de l'oscillateur de secours à l'oscillateur principal pour générer le signal d'horloge du microcontrôleùr, lorsque ledit oscillateur principal est stabilisé.

14. Système selon les revendications 12 et 13, **caractérisé en ce qu'**il comprend des moyens (PLLEN) pour activer la boucle à verrouillage de phase et des moyens (CKSEL) pour basculer de l'oscillateur principal (OSC) à la boucle à verrouillage de phase (PLL) pour générer le signal d'horloge du microcontrôleur, lorsque ladite boucle est verrouillée.

15. Système selon la revendication 14, **caractérisé en ce qu'**il comprend des moyens (MX1, MX0 pour configurer la boucle à verrouillage de phase (PLL) avant son activation.

16. Système selon l'une quelconque des revendications 12 à 15, **caractérisé en ce que** l'oscillateur principal est un oscillateur externe.

17. Microcontrôleur, **caractérisé en ce qu'**il comprend un système d'horloge selon l'une quelconque des revendications 12 à 16.
